# EUROPEAN PATENT SPECIFICATION

(11) **EP 1 261 823 B1**
(45) Date of publication and mention of the grant of the patent: **14.06.2006**
(21) Application number: 01924080.3
(22) Date of filing: 02.03.2001
(51) Int. Cl.: F16K 27/02, F16K 1/12

(54) **VALVE**
VENTIL
VANNE INTELLIGENTE

(30) Priority: 06.03.2000 TR 200000631
(43) Date of publication of application: 04.12.2002
(73) Proprietor: Sungur, Naim, Gaziosmanpasa 06660 Ankara (TR); Kefoglu, Kemal Önder, Emek Ankara, 06660 Ankara (TR)
(72) Inventor: Sungur, Naim, Gaziosmanpasa 06660 Ankara (TR); Kefoglu, Kemal Önder, Emek Ankara, 06660 Ankara (TR)
(74) Representative: LOUIS, PÖHLAU, LOHRENTZ
(86) International application number: PCT/TR2001/000011
(87) International publication number: WO 2001/066984

(56) References cited:
- FR-A- 972 209
- FR-A- 1 569 121
- IT-B- 1 199 046
- US-A- 1 758 419
- US-A- 4 343 336

## Description

The present invention is related to the electrically operated gas valves that control the gas flow. The present invention concerns an intelligent valve comprising a valve body and flanges with movable heads having a certain number of perforations for the mounting of pipes comprising flanges having screw holes, which are placed on both ends of the valve body, wherein during an installation of the valve the flanges with movable heads are fitted, by turning, into the flanges on the pipes laid in advance, so that the screw holes match with the perforations of the flanges and are fixable by using bolts and nuts, and that the position of the valve is adjustable in conformity with its environment, without any need to cut and reweld the flanges of the pipes.

FR 972209 A discloses such kind of valve, wherein the flanges of the pipes are rotatable.

FR 1 569 121 A discloses a threepart valve and flanges with movable heads, which are fixable by using bolts and nuts, wherein the flanges comprise a certain number of perforations for the mounting of the valve.

In the state of art, the electrical valves that control the gas flow are produced in two types, namely the solenoid valves and the motor valves. A high electrical energy is required for the operation of the electrical valves. There are valves that are operated by the city mains voltage as well as those that operate with such potential values as 12V, 24V. High powers are required for the operation of the valves, for instance 45-50 W for the operation of the motor valves and 80-90 W for the solenoids. The valves continue consuming energy when they are at the open position and are automatically closed when the power is cut-off. Both types of the valves are not suitable to operate on a battery for a long time, hence they need to be connected to the city network. Such valves are of a cumbersome, expensive, heavy type that consumes a lot of energy, with large surfaces to be isolated against gas leakages. The valves with big diameters have flanges and are connected to the flanged pipes.

In the state of art today, the valves cut off the gas flowing to the burner when the electrical power supply is interrupted or when a fire alarm is transmitted and an uninterrupted city mains is required in order to keep the valve open. Furthermore as these valves do not contain any pressure-, heat- and the like, sensors, they cannot be utilized as volume correctors together with the meters.

The object of the present invention is to provide the operation of the electrical valves used in order to control the gas flow, with less energy consumption.

Another object of the present invention is to provide the operation of the electrical valves with a battery for a long time without being connected to the city mains.

Yet another object of the present invention is to provide the volume correction of the gas passing through the valve by measuring its pressure and heat.

Another object of the present invention is to provide the production of an electrical valve, the gas isolation surface of which is minimized.

The embodiment of the valve realized in order to attain the above objects of the present invention, has been illustrated in the attached drawings, wherein :
- Figure 1,: is the section view of the valve.
- Figure 2,: is the view showing the cam position when the valve flap is open.
- Figure 3,: is the view of a cam that performs proportional switching in a non-inventive way,
- Figure 4,: is the view of the flanges with movable heads
- Figure 5,: is the view of the driver unit

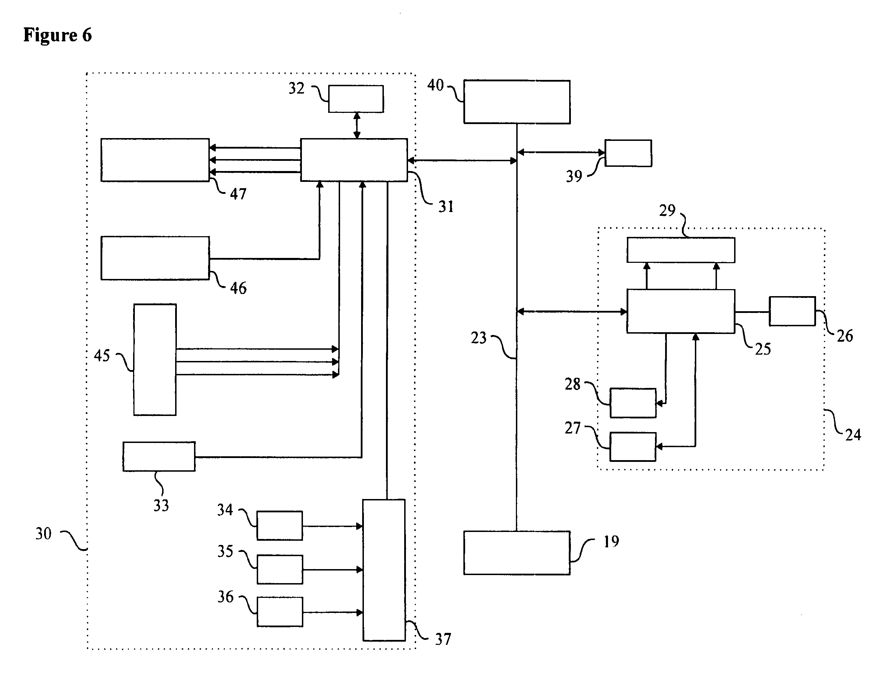

- Figure 6,: is the electronic circuit diagram of the control unit
- Figure 7,: is the electronic circuit diagram of the valve control and measurement unit.
- Figure 8,: is the electronic circuit diagram of the local assessment and control unit.
- Figure 9,: is the electronic circuit diagram of the power unit.

The reference numerals of the components shown on the drawings are as follows :
1. Valve body
2. Valve flap
3. Flap spring
4. Flap stabilization spring
5. Cam
6. Cam shaft
7. Filter sieve
8. Axis
9. Flange with movable head
9a. Flange gasket
10. Gas inlet port
11. Gas outlet port
12. Driver unit
13. Electrical motor
14. Gear
15. Worm gear
16. Counter gear
17. Microswitch cam
18. Microswitch
19. Power unit
20. Internal battery
21. Connection adapter
22. Control unit
23. Serial channel control bus
24. Local assessment and control unit
25. Local assessment and control unit microprocessor
26. Local assessment and control unit ee prom
27. Infrared communication unit
28. Sound warning unit
29. Indicator unit
30. Valve control and measurement unit
31. Valve control and measurement unit microprocessor
32. Valve control and measurement unit eeprom
33. Gas pulse detector
34. Heat sensor
35. Pressure sensor
36. Acceleration sensor
37. Amplificator
38. Cable communication interface
39. Radio (wireless) communication interface
40. Data processing and crediting channel interface
41. Gas pulse inlet filter circuit
42. Connection control inlet filter circuit
43. Flap sealing
44. Cam shaft passage sealing
45. Battery cover and meter contact control connections
46. Flap position control connection
47. Motor control unit
48. Battery test unit

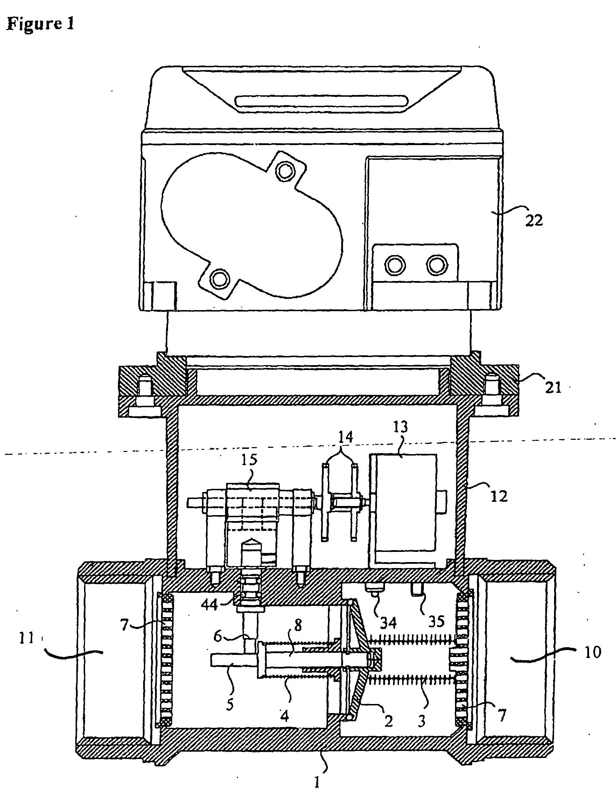

The electrically operated gas valve consists of the valve body (1), the valve flap (2) with a movable head, located in the said valve body (1) and placed on a sliding axis (8), a flap spring (3) and a flap stabilization spring (4), a cam (5) that serves to open and close the flap (2) by pushing the said axis (8), a cam shaft (6) rotating the cam (5), a worm gear (15) and its counter gear (16), the electric motor (13) which drives the gears (14), a microswitch cam (17) that reports the position of the flap (2), and the control unit (22) wherein the local assessment and control unit (24) providing the opening/closing of the valve and the valve control and measurement unit (30) are contained, as well as the pressure sensor (35) measuring the gas pressure in the valve, the heat sensor (34), the acceleration sensor (36) measuring the vibration and the flanges (9) with movable heads that provide easy connection to the flange pipes (Fig.1).

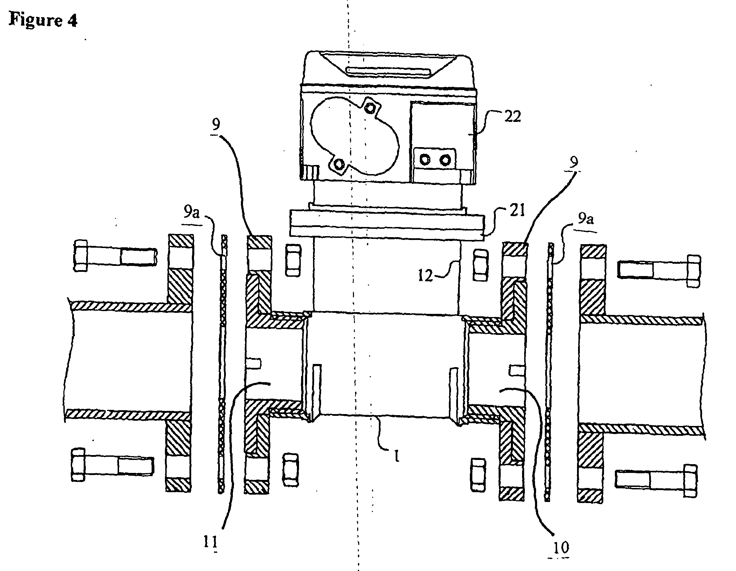

Flanges (9) with movable heads that are rotatable around the axis of the valve body (1) and that have a certain number of perforations for the mounting of the pipes, are placed on both ends of the valve body (1). During the installation of the valve, these flanges (9) are fitted, by turning, into the stationary flanges on the pipes laid in advance, so that the screw holes match with each other, and are fixed by using bolts and nuts. Sealing is provided by gaskets (9a). The position of the valve may be adjusted in conformity with its environment, without any need to cut and reweld the stationary flanges of the pipes (Fig.4).

The valve body (1) comprises the filter sieve (7), axis (8), valve flap (2), flap sealing gasket (43), flap stabilization spring (4), flap spring (3), cam (5), cam shaft (6), cam shaft passage gasket (44) and the pressure sensor (35) and the heat sensor (34) placed optionally in the valve body (1). The filter sieve (7) is placed on the gas inlet port (10) and the gas outlet port (11) of the valve body (1).

The valve flap (2) is placed inside the valve body (1), vertically to its axis, between the gas inlet and outlet ports (10,11) of the valve. The flap (2) is dome-shaped and has a central cavity wide enough for receiving an end portion of the axis (8). The flap (2) is fixed onto the axis (8) by mounting an end portion of the axis (8) which is placed in parallel to the axis of the valve body and which moves on this axis.

The fluttering of the flap (2) is prevented by placing a flap stabilization spring (4) which retains the valve flap (2) in the closed position, between the filter sieve (7) disposed at the valve gas inlet port (10) and the lower surface of the valve flap (2). As the valve flap (2) is provided with a movable head, a complete closing is provided even if the flap (2) is not attached square with the cam shaft (6) axis. The flap spring (3) is placed between the upper side of the flap (2) and the rabbet formed at the other end of the axis (8), in parallel to the sliding axis (8) in order to enable the valve flap (2) to be in equilibrium, in the closed position.

The only place that requires a gas leak-proof sealing in the valve is the point with a minimum surface area, where the cam shaft (6) that rotates the cam (5) projects out of the valve body (1). Here the gas sealing is provided by an o-ring which is a standard cam shaft passage gasket (44) suitable for the purpose. Furthermore, in a portion of the valve body (1), between the filter sieve (7) put in the valve gas inlet port (10) and the valve flap (2), a pressure sensor (35) measuring the pressure of the gas entering the valve and a heat sensor (34) are placed. In case these sensors (34,35) are used, the holes opened on the valve body (1) are sealed using epoxy resin which is resistant to heat and gas, during the mounting of the sensors.

The opening and closing of the valve is provided by rotating the cam (5), which opens or closes the valve by working against the flap stabilizing spring (4). On the axis (8) a cam (5) which is rotated by the cam shaft (6) and the rotational axis of which is on the axis (8) is placed. This cam (5) has such a structure that, the outer surfaces of its long and short leg are sloped outwards whereas the inner surfaces are straight and the short leg intersects with the long leg perpendicularly and the sides being straight in a L-shaped structure. The rotational axis of the cam (5) is located at the top point of the long leg, and on the axis (8).

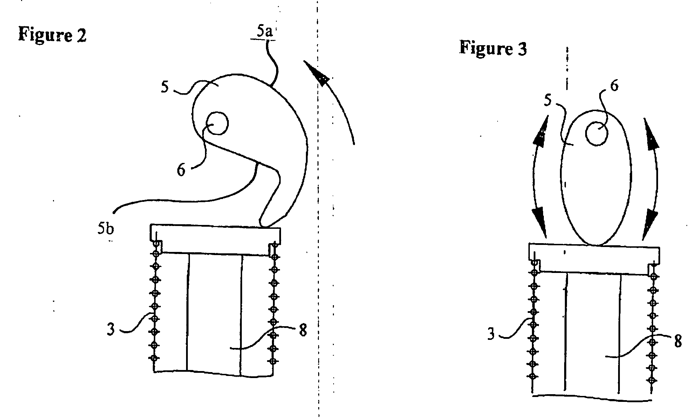

This cam (5), to which the rotational movement obtained by the electrical motor (13) is transmitted by means of the cam shaft (6) which is rotated by the gears (14), moves the axis (8) and thus provides the opening/closing of the valve flap (2). Where the flap stabilizing spring (4) and the flap spring (3) keeps the flap stationary in a closed position, the gas pressure applies force on the flap (2) in the closing direction and thereby helps to provide a full closing (Figure 2).

The motor control unit (47) provides the to-and fro-rotation of the motor (13) by means of the valve control and measurement unit microprocessor (31) and the braking of the motor (13) in order to stop the cam (5) exactly at the desired position at the end of the motor driving operation. The required information about the position of the cam (5) used for the closing / opening operation is provided by the microswitch cam (17) and the microswitch (18). Motor control unit (47) is located in the drive unit (12).

The drive unit (12) containing more than one gear (14), worm gear (15), batteries (20), electrical motor (13), microswitch cam (17) and microswitch (18) is placed over the valve body (1). The electrical motor (13) running with a low voltage and current, drives the worm gear (15) by means of the gears (14), which in turn turns the counter gear (16) (wormgear gear system).

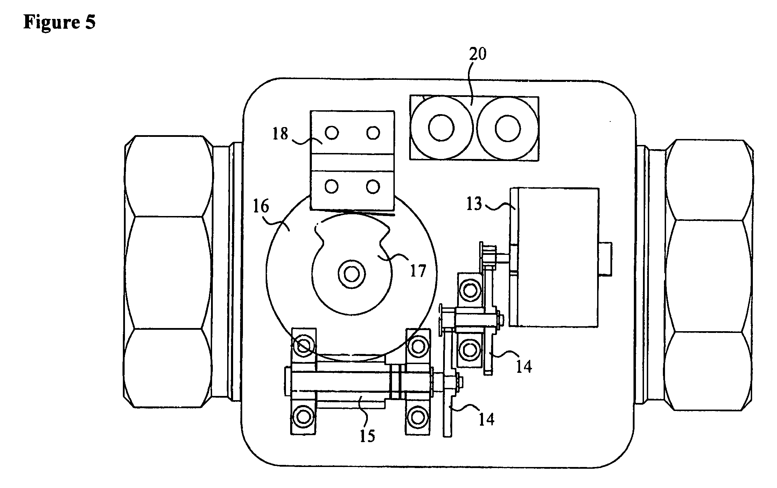

The gears (14) activate the cam (5) which is connected to the cam shaft (6), by rotating the cam shaft (6). When the top point of the short leg of the cam (5) contacts with the axis (8), the flap (2) comes to the maximum open position. This position of the cam (5) is transmitted to the motor control unit (47) by means of the microswitch cam (17) and the microswitch (18) which are located on the counter gear (16) in an almost contact position with each other. At this position, the motor control unit (47) applies electronic braking to the electrical motor in order to stop the cam (5) at the top point. To close the valve, a much less rotation of the motor (13) and dropping the cam (5) down from the top point would be sufficient. In this case, the flap stabilization spring (4) closes the valve rapidly. An extra power is not consumed by the valve in order to maintain its position (Fig.5).

By increasing or decreasing the number of the gears (14) depending on the diameter and pressure of the valve and on the rigidity of the springs (3,4), various torque forces and closing speeds can be obtained so that the electrical motor (13) drives using a minimum energy. Thus the valves produced for the diameters 20,50, 100 mm can be closed respectively in 0.05, 0.2 and 0.8 seconds by a power of 180, 400, 1200 mw. The control unit (22), comprising the indicator unit (29), cable communication interface (38), (wireless) radio communication interface (39), valve control and measurement unit (30), and local assessment and control unit (24), is connected to the valve by a connection adaptor (21). The connection adaptor (21) can be fastened to the valve by turning at 90° angles and the control unit (22) can be installed on the valve (vertical, perpendicular and at both directions) a position that is most suitable to the valve, by means of the said connection adaptor (21).

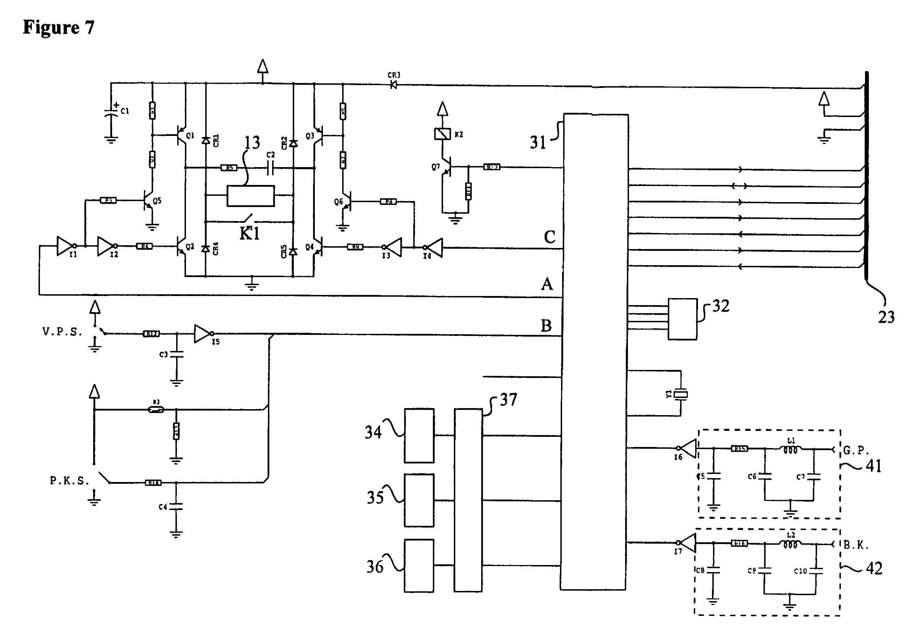

The communication of the valve with the external control units is provided by the cable communication interface (38) and the (wireless) radio communication interface (39). The cable communication interface (38) is provided by a USART that provides connection to normal PCs or to POS stations at RS 232 or RS 485 standards; whereas the (wireless) radio communication interface (39) is an interface that provides the meter readings as AMR (Auto maticol Meter Reading) and the remote bidirectional control of the valves through the wireless. The valve control and measurement unit (30) comprises a motor control unit (47), a valve control and measurement unit microprocessor (31), a valve control and measurement unit Eeprom (32), a gas pulse detector (33), heat sensor (34), pressure sensor (35), acceleration sensor (36), battery cover and meter junction control connections an amplificator (37) (Fig.7).

The analog signals from the heat sensor (34), pressure sensor (35) and acceleration sensor (36) are amplified by the amplificator (37) and are converted to digital signals by the ADC (analog to digital converter) and transferred to the valve control and measurement unit micro processor (31), wherein such data as close/open commands related to the valve, and such measurement readings as the gas pulse, heat, pressure, acceleration, and battery energy level are received the required calculations are made and these informations are sent to the local assessment and control unit microprocessor (25) by means of the serial channel control bus (23). This serial channel control bus (23) contains and carries the I²C bus signals serving for the communication between the valve control and measurement unit (30) and the local assessment and control unit (24), as well as the signals required for the distribution of the power provided by the power unit (19) and the control signals of all units. The valve can be used as a volume corrector valve and as industrial control valves connected to computer systems in the industrial area, when pressure and heat sensors (35, 34) are attached to it.

By means of these sensors (35, 34) measuring the pressure and heat of the gas passing through the valve, the measurement values of the gas meter can be corrected according to the measured pressure and heat values. In other words the valve can also be used as a volume corrector. The connections may be with or without cable or as a multi-drop bus connection. When the heat (34), pressure (35) and acceleration (36) sensors are mounted, and with radio command, the valve may be used for the purpose of cutting off the gas in case of fire or earthquake, the valve is able to cut off the gas flow upon a warning from the acceleration sensor (36) situated on itself. In order to avoid false alarms, the valve can be closed by a warning from the central control, by mounting a wireless communication interface (39) on it. Sensitive seismic sensors located at different points sense the seismic waves and transfer to the center via radio. An evaluation is made at the center by determining when an earthquake warning comes after a particular number of the said sensors and if it is decided as the result of this evaluation, that an earthquake is occurring, transmits this information from its own transmitting antenna. When the valve receives this transmission through the radio placed on it self, it cuts off the gas flow. The time interval to pass between the transmission of the warning by the sensors and the gas flow cut off, is below one second.

The battery cover and meter junction control connections (45) consist of the reed switch used in order that the interventions to be made to the valve could be sensed by the valve control and measurement unit microprocessor (31) and of the battery (20) and device cover contacts determining the position of the battery cover.

In such applications when the valve is used in connection with the gas meter, the pulses coming in a frequency that is proportional to the amount of the gas passing through the meter, are detected by a gas pulse detector (33). The gas pulse inlet filter circuit (41) consisting of a coil and capacitor circuit elements, provided in the said gas pulse detector (33) protects the gas pulse from interferences. The gas pulse passing through the filter reaches the valve control and measurement unit microprocessor (31) after its logic level is checked by an inverter. Whereas the pulse cable connection control inlet filter circuit (42) consisting of a coil and capacitor circuit elements, protects the connection control between the meter pulser and the valve electronics. The connection control data passing through the pulse cable connection control inlet filter circuit (42) reaches the valve control and measurement unit microprocessor (31) after its logic level is checked by an inverter.

The valve control and measurement unit EE prom (32) is used to retain such data as the position, heat, pressure and acceleration values of the valve in the memory, in case there is an energy interruption due to any reason. The electric motor (13) is turned in two directions by a bridge circuit formed by the CR1, CR2, CR4, CR5 diodes and Q1, Q2, Q3 ve Q4 transistors.

When the ends A and B from the valve control and measurement unit microprocessor (31) are simultaneously at logic "0" level, the operation of the electric motor (13) is inhibited. The electrical motor (13) is turned in one direction when the end A takes the value logic "1" and B takes the value logic "0"; and it turns in another direction when the end A takes the value logic "0" and B takes the value logic "1". Even if the ends A and B are not foreseen in the valve control and measurement unit microprocessor (31) programme, and even if they are at logic "1" level simultaneously, the undesired operation of the electric motor is still inhibited by the removal of the transistors Q 5 and Q 6 from transmission. The relay contact K1 is used to immediately stop the movement of the electric motor (13). The power supply to the electric motor (13) is cut by making the outputs A and B from the valve control and measurement unit microprocessor (31), logic "0" signal, and the K2 relay coil is energized by applying the logic "1" signal to the end C; in order to stop the electrical motor (13). This trips the K1 relay contact and applies braking by short-circuiting the electrical motor (13).

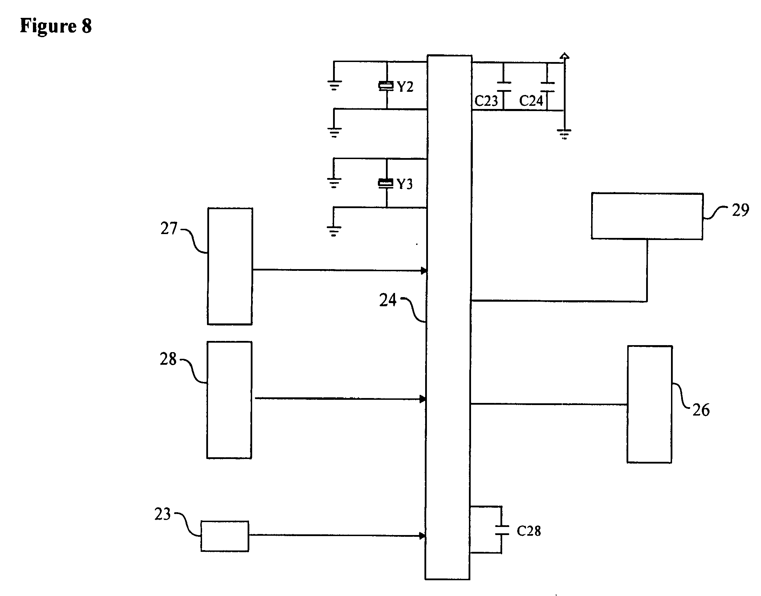

The local assessment and control unit (24) consists of the local assessment and control unit microprocessor (25), local assessment and control unit EE prom (26), the indicator unit (29), a sound warning unit (28) and infra red communication unit (27); (Figure 8).

The local assessment and control unit microprocessor (25) is a central microprocessor which receives the information calculated and assessed by the valve control and measurement unit microprocessor (31) by means of the serial channel control bus (23) and which provides the required operations in line with the received data and displays the said data on the LCD display screen at the indicator unit (29).

The local assessment and control unit EE prom (26) which keeps all information in its memory when energy is interrupted due to any reason.

The sound warning unit (28) which is used to give sound warning signals and consists of a buzzer, a transistor and resistances. The infrared communication unit (27) which is used to provide infrared communication with the external devices and consists of a transmitter and a receiver.

The power unit (19), used by the data processing and crediting channel interface (40), the radio communication interface (39), valve control and measurement unit (30), local assessment and control unit (24) interfaces, is fed by the internal battery (20). The system energy is provided by a low level DC source that can be connected to the external low level DC source input ends. The diode and a resistance located at the inlet of the low level DC source, enable these two sources to feed the system without flowing into one another. Two resistors and one condensator located at the internal battery (20) entry, enables the level detector to generate warning when the battery (20) is dismounted.

Furthermore, the potential value at the end of the condensator is lowered to a level suitable for use in the logic circuits and this value is kept constant. Three condensators connected to the potential regulator serve as filters. Diode, resistance and capacitor circuit members are used that another level detector in the power unit (1) creates a logic "0" value at the reset level. Two resistors connected to the said level detector provide the application of the reset signal to the bus. The electrical load contained in the battery (20) is defined by measuring the battery potential and impedance. This is done by passing current with two different values through the battery and by measuring the voltage of the battery at these current values by means of the valve control and measurement unit microprocessor (31) ADC; and finally its impedance is calculated, in order to decide whether the battery could be used or not.

The battery test unit (48) is connected to the valve control and measurement unit microprocessor (31) by four wires. These are, the first and second current control ends connecting the potentials at which different currents wile pass to the battery, and the first and second battery level ends connecting the battery voltage to the value control and measurement unit microprocessor (31) ADC. The power unit is provided with Ul potential detector, in order to see whether the internal battery is connected or not. If the internal battery is connected, a logic "0" signal is sent to the serial channel control bus, not a logic "1" signal.

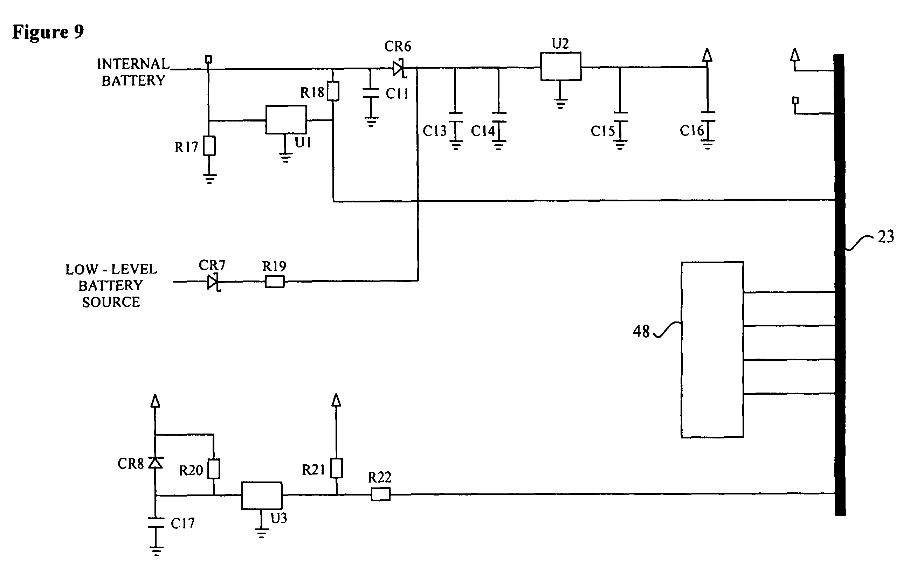

The R17 resistance provides a zero value for the potential detector inlet, when there is no battery; whereas R18 is the pull-up resistance of the potential detector collector outlet. A CR6 zener diode provides the insulation so that the C₁₁ capacitor value is not effected. Moreover, U2 potential regulator serves to prevent the circuit from being effected from a potential loss that may occur in the internal battery. Power shifting is prevented by using the CR7 and CR8 circuit members. By using the reset circuit, the internal battery is enabled to give a start up signal when connected to the circuit. Additionally, the two different battery potential values obtained from ADC are measured in the battery test unit (48) in order to assess the impedance of the battery to decide whether to replace it or not (Fig.9).

The valve may be used with the devices that have to be operated by battery (20) for a long time. Its open/close position is changed by consuming very little energy and does not need extra energy to maintain its position.

A non-inventive valve can also perform proportional opening/closing. For this purpose, the shape of the cam (5) placed on the axis (8) is changed and made elliptical (Fig. 3). The position information of the cam (5) used for proportional opening/closing is obtained by the rotation of the feed-back potentiometer used instead of the microswitch (18), by a gear (14) used for the microswitch cam (17) and pro cessing the potential value being read by the potentiometer by ADC and assessing it by the value control and measurement unit microprocessor (31). Therefore, the flap position control connection (46) consists of an inverter, a valve position control microswitch (18) showing whether the valve is completely open or closed, which is connected to the valve control and measurement module microprocessor and of an amplificator (37) to the ADC end of which the valve control and measurement unit microprocessor (31) of the potentiometer is connected.

For a proportional control, a negative or positive mean bridge current is provided by giving the signals at the ends A and B, at disymmetrical periods in the course of the time.

## Claims

1. An intelligent valve comprising a valve body (1) and flanges (9) with movable heads that are rotatable around an axis of the valve body (1) and that have a certain number of perforations for the mounting of pipes comprising stationary flanges having screw holes, which are placed on both ends of the valve body (1), wherein during an installation of the valve the flanges (9) are fitted, by turning, into the stationary flanges on the pipes laid in advance, so that the screw holes match with the perforations of the flanges (9) and are fixable by using bolts and nuts, and that the position of the valve is adjustable in conformity with its environment, without any need to cut and reweld the stationary flanges of the pipes, wherein a valve flap (2) is placed inside the valve body (1), vertically to its axis, between gas inlet port (10) and gas outlet port (11) of the valve, the valve flap (2) being dome-shaped with a central cavity wide enough for receiving an end portion of an axis (8), wherein the valve flap (2) is fixed onto the axis (8) by mounting an end portion of the axis (8) which is placed in parallel to the axis of the valve body (1) and which moves on this axis of the valve body (1), wherein a flap spring (3) is placed on a lower surface of the valve flap (2) in order to keep the valve flap (2) in balance in the closed position, and swinging of the valve flap (2) is prevented by placing a flap stabilization spring (4) on an upper surface of the valve flap (2), wherein a cam (5) is placed on the axis (8), rotated by a cam shaft (6), the cam (5) having a L-shaped structure comprising a long leg and a short leg perpendicular intersecting the long leg seen along a rotational axis of the cam shaft (6), wherein in the same view outer edge surfaces (5a) of the L-shaped structure are sloped outwards whereas inner edge surfaces (5b) of the L-shaped structure are straight and the rotational axis of the cam shaft (6) intersects a rotational axis of the axis (8) perpendicularly, wherein the cam (5), to which the rotational movement obtained by an electrical motor (13) is transmitted by means of the cam shaft (6) which is rotated by gear (14), moves the axis (8) in parallel to the axis of the valve body (1) and thus provides the opening/closing of the valve flap (2) to which the axis (8) is connected.

2. An intelligent valve as claimed in Claim 1,
**characterized in that**
the flap spring (3) keeping the valve flap (2) in balance in the closed position is placed between a filter sieve (7) disposed at the gas inlet port (10) and the lower surface of the valve flap (2).

3. An intelligent valve as claimed in Claim 1 or Claim 2,
**characterized in that**
the flap stabilizing spring (4) is placed, concentric to the axis (8), between the upper surface of the valve flap (2) and a rabbet formed at the other end of the axis (8) to prevent swinging of the valve flap (2).

4. An intelligent valve as claimed in anyone of Claims 1 to 3,
**characterized with**
a drive unit (12) consisting of the electrical motor (13) running with a low voltage and current; the gear (14); a worm gear (15); a counter gear (16);
a microswitch cam (17) and a microswitch (18) which are located on the counter gear (16) in an almost contact position with each other; the microswitch cam (17) transferring data about the position of the cam (5) used for opening/dosing of the valve flap (2) to a motor control unit (47) and also is able to open and close the microswitch (18); the said drive unit (12) being the one which provides a to- and fro-rotation of the electrical motor (13) by means of a valve control and measurement unit microprocessor (31) and braking of the electrical motor (13) in order to stop the cam (5) exactly at a desired position at the end of a motor driving operation.

5. An intelligent valve as claimed in anyone of Claims 1 to 4,
**characterized with**
a pressure sensor (35) measuring the pressure of gas entering the valve and a heat sensor (34) measuring its heat, placed in a portion of the valve body (1), between the filter sieve (7) put on the gas inlet port (10) and the valve flap (2),
so that the valve is usable as a gas volume corrector.

6. An intelligent valve as claimed in anyone of Claims 1 to 5,
**characterized with**
a cable communication interface provided by a USART, which provides connection to normal PCs or to POS stations at RS 232 or RS 485 standards.

7. An intelligent valve as claimed in anyone of Claims 1 to 6,
**characterized with**
a (wireless) radio communication interface (39), which is an interface that provides meter readings as AMR (Automatical Meter Reading) and the remote bidirectional control of the valve.

8. An intelligent valve as claimed in anyone of Claims 4 to 7,
**characterized with**
with the valve control and measurement unit microprocessor (31), that gives the commands for the valve opening/closing operations, that makes calculations using measurement data as gas pulse data obtained from a gas pulse detector, heat data obtained from the heat sensor (34), pressure data obtained from the pressure sensor (35) and acceleration data obtained from an acceleration sensor (36), battery energy level data of an internal battery (20), and which transmits the above mentioned data to a local assessment and control unit microprocessor (25) by means of a serial channel control bus (23).

9. An intelligent valve as claimed in anyone of Claims 1 to 7,
**characterized with**
a valve control and measurement unit EEprom (32) which is used to retain such data as the position, heat, pressure and acceleration value data of the valve in a memory, in case there is an energy interruption due to any reason.

10. An intelligent valve as claimed in Claim 8 or Claim 9,
**characterized with**
the local assessment and control unit microprocessor (25), contained in a local assessment and control unit (24) together with a local assessment and control unit EEprom (26), an indicator unit (29), a sound warning unit (28) and an infrared communication unit (27); which receives the information calculated and assessed by the valve control and measurement unit microprocessor (31) by means of the serial channel control bus (23) and which provides the required operations in line with the received data and displays the said data on a LCD display screen at the indicator unit (29).

11. An intelligent valve as claimed in Claim 10,
**characterized with**
the local assessment and control unit EEprom (26) which keeps all information in its memory when energy is interrupted due to any reason.

12. An intelligent valve as claimed in anyone of Claims 4 to 11,
**characterized with**
the valve control and measurement unit microprocessor (31) which processes and evaluates the position information of the cam (5) obtained by the rotation of a feed-back potentiometer by the gear (14), and the processed potential value being read by the potentiometer by ADC.

13. An intelligent valve as claimed in anyone of Claims 10 to 12,
**characterized with**
the infrared communication unit (27) which is used to provide infrared communication with external devices consists of a transmitter and a receiver.

14. An intelligent valve as claimed in anyone of Claims 8 to 13,
**characterized in that**
the internal battery (20) provides power used by a data processing and crediting channel interface (40), the radio communication interface (39), a valve control and measurement unit interface and a local assessment and control unit interface.

15. An intelligent valve as claimed in Claim 14,
**characterized with**
a power unit (19) consisting of a low level DC source that is connectable to input ends of an external low level DC source and which provides power used by the data processing and crediting channel interface (40), the radio communication interface (39), the valve control and measurement unit interface and the local assessment and control unit interface.

## Patentansprüche

1. Intelligentes Ventil, das einen Ventilkörper (1) und Flansche (9) mit beweglichen Köpfen, die um eine Achse des Ventilkörpers (1) drehbar sind und eine bestimmte Anzahl von Perforationen für die Anbringung von Rohren mit stationären Flanschen mit Schraub-Löchern besitzen, die an beiden Enden des Ventilkörpers (1) angeordnet sind, umfasst, wobei während der Installation des Ventils die Flansche (9) durch Drehen in die stationären Flansche an den im Voraus verlegten Rohren eingesetzt werden, so dass die Schraub-Löcher mit den Perforationen der Flansche (9) übereinstimmen und unter Verwendung von Schrauben und Muttern befestigt werden können, und dass die Position des Ventils in Übereinstimmung mit seiner Umgebung einstellbar ist, ohne dass die stationären Flansche der Rohre abgeschnitten und erneut verschweißt werden müssen, wobei in dem Ventilkörper (1) senkrecht zu dessen Achse eine Ventilklappe (2) zwischen einem Gaseinlassanschluss (10) und einem Gasauslassanschluss (11) des Ventils angeordnet ist, wobei die Ventilklappe (2) haubenförmig ist und einen mittleren Hohlraum besitzt, der weit genug ist, um einen Endabschnitt einer Welle (8) aufzunehmen, wobei die Ventilklappe (2) an der Welle (8) durch Anbringen eines Endabschnitts der Welle (8), der parallel zu der Achse des Ventilkörpers (1) angeordnet ist und sich längs dieser Achse des Ventilkörpers (1) bewegt, befestigt ist, wobei eine Klappenfeder (3) an einer unteren Oberfläche der Ventilklappe (2) angeordnet ist, um die Ventilklappe (2) in der geschlossenen Stellung im Gleichgewicht zu halten, wobei ein Schwenken der Ventilklappe (2) durch Anordnen einer Klappenstabilisierungsfeder (4) auf einer oberen Oberfläche der Ventilklappe (2) verhindert wird, wobei auf der Welle (8) ein Nocken (5) angeordnet ist, der durch eine Nockenwelle (6) gedreht wird, wobei der Nocken (5) eine L-förmige Struktur hat, die einen langen Schenkel und einen kurzen Schenkel, der den langen Schenkel bei Betrachtung in Richtung der Drehachse der Nockenwelle (6) senkrecht schneidet, umfasst, wobei in derselben Ansicht Außenkantenflächen (5a) der L-förmigen Struktur nach außen geneigt sind, während Innenkantenflächen (5b) der L-förmigen Struktur geradlinig sind und die Drehachse der Nockenwelle (6) eine Drehachse der Welle (8) senkrecht schneidet, wobei der Nocken (5), an den die durch einen Elektromotor (13) erhaltene Drehbewegung mittels der Nockenwelle (6) übertragen wird, die durch ein Getriebe (14) gedreht wird, die Welle (8) parallel zu der Achse des Ventilkörpers (1) bewegt und somit das Öffnen/Schließen der Ventilklappe (2), mit der die Welle (8) verbunden ist, hervorruft.

2. Intelligentes Ventil nach Anspruch 1,
**dadurch gekennzeichnet, dass**
die Klappenfeder (3), die die Ventilklappe (2) in der geschlossenen Stellung im Gleichgewicht hält, zwischen einem Filtersieb (7), das am Gaseinlassanschluss (10) angeordnet ist, und der unteren Oberfläche der Ventilklappe (2) angeordnet ist.

3. Intelligentes Ventil nach Anspruch 1 oder 2,
**dadurch gekennzeichnet, dass**
die Klappenstabilisierungfeder (4) konzentrisch zu der Welle (8) zwischen der oberen Oberfläche der Ventilklappe (2) und einer am anderen Ende der Welle (8) ausgebildeten Fuge angeordnet ist, um ein Schwenken der Ventilklappe (2) zu verhindern.

4. Intelligentes Ventil nach einem der Ansprüche 1 bis 3,
**gekennzeichnet durch**
eine Antriebseinheit (12), die aus dem Elektromotor (13), der mit einer niedrigen Spannung und einem niedrigen Strom läuft; dem Getriebe (14); einem Schneckenradvorgelege (15); einem Vorgelegerad (16); einem Mikroschalternocken (17) und einem Mikroschalter (18), die sich an dem Vorgelegerad (16) in einer Position befinden, in der sie fast in Kontakt sind, besteht; wobei der Mikroschalternocken (17) Daten bezüglich der Position des Nockens (5), der zum Öffnen/Schließen der Ventilklappe (2) verwendet wird, an eine Motorsteuereinheit (47) überträgt und außerdem den Mikroschalter (18) öffnen und schließen kann; wobei die Antriebseinheit (12) jene ist, die eine Vorwärts- und Rückwärtsdrehung des Elektromotors (13) mittels einer Ventilsteuerung und eines Messeinheit-Mikroprozessors (31) schafft und den Elektromotor (13) bremst, um den Nocken (5) exakt an einer gewünschten Position am Ende des Motorantriebsbetriebs anzuhalten.

5. Intelligentes Ventil nach einem der Ansprüche 1 bis 4,
**gekennzeichnet durch**
einen Drucksensor (35), der den Druck des in das Ventil eintretenden Gases misst, und einen Wärmesensor (34), der dessen Wärme misst, die in einem Abschnitt des Ventilkörpers (1) zwischen dem Filtersieb (9), das in den Gaseinlassanschluss (10) eingesetzt ist, und der Ventilklappe (10) angeordnet sind, so dass das Ventil als eine Gasvolumen-Korrektureinrichtung verwendet werden kann.

6. Intelligentes Ventil nach einem der Ansprüche 1 bis 5,
**gekennzeichnet durch**
eine Kabelkommunikation-Schnittstelle, die **durch** einen USART bereitgestellt wird, der eine Verbindung mit normalen PCs oder mit POS-Stationen mit RS 232- oder RS 485-Standards schafft.

7. Intelligentes Ventil nach einem der Ansprüche 1 bis 6,
**gekennzeichnet durch**
eine (drahtlose) Funkkommunikationsschnittstelle (39), die eine Schnittstelle ist, die Messgerätablesungen als AMR (automatische Messgerätablesung, Automatical Meter Reading) und die bidirektionale Fernsteuerung des Ventils schafft.

8. Intelligentes Ventil nach einem der Ansprüche 4 bis 7,
**gekennzeichnet durch**
den Ventilsteuerungs- und Messeinheit-Mikroprozessor (31), der die Befehle für den Ventilöffnungs-/Ventilschließbetrieb liefert, der Berechnungen unter Verwendung von Messdaten als Gasimpulsdaten, die von einem Gasimpulsdetektor erhalten werden, als Wärmedaten, die von dem Wärmesensor (34) erhalten werden, als Druckdaten, die von dem Drucksensor (35) erhalten werden, und als Beschleunigungsdaten, die von einem Beschleunigungssensor (36) erhalten werden, für Batterieenergiepegel-Daten einer internen Batterie (20) ausführt und diese Daten an einen lokalen Bemessungs- und Steuereinheit-Mikroprozessor (25) mittels eines Steuerbusses (23) mit seriellem Kanal überträgt.

9. Intelligentes Ventil nach einem der Ansprüche 1 bis 7,
**gekennzeichnet durch**
einen Ventilsteuerungs- und Messeinheit-EEPROM (32), der verwendet wird, um Daten wie etwa die Positions-, Wärme-, Druck- und Beschleunigungswert-Daten des Ventils in einem Speicher zu halten, falls aus irgendeinem Grund eine Unterbrechung der Energiezufuhr auftritt.

10. Intelligentes Ventil nach Anspruch 8 oder Anspruch 9,
**gekennzeichnet durch**
den lokalen Bemessungs- und Steuereinheit-Mikroprozessor (25), der in einer lokalen Bemessungs- und Steuereinheit (24) zusammen mit einem lokalen Bemessungs- und Steuereinheit-EEPROM (26), einer Anzeigeeinheit (29), einer akustischen Warneinheit (28) und einer Infrarotkommunikationseinheit (27) enthalten ist; der die **durch** den Ventilsteuerungs- und Messeinheit-Mikroprozessor (31) berechneten und bemessenen Informationen mittels des Steuerbusses (23) mit seriellem Kanal empfängt und der die erforderlichen Operationen zusammen mit den empfangenen Daten bereitstellt und diese Daten auf einem LCD-Anzeigeschirm in der Anzeigeeinheit (29) anzeigt.

11. Intelligentes Ventil nach Anspruch 10,
**dadurch gekennzeichnet, dass**
der lokalen Bemessungs- und Steuereinheit-EEPROM (26) alle Informationen in seinem Speicher hält, wenn die Energiezufuhr aus irgendeinem Grund unterbrochen wird.

12. Intelligentes Ventil nach einem der Ansprüche 4 bis 11,
**dadurch gekennzeichnet, dass**
der Ventilsteuerungs- und Messeinheit-Prozessor (31) die Positionsinformationen des Nockens (5), die durch die Drehung eines Rückkopplungspotentiometers durch das Getriebe (14) erhalten werden, verarbeitet und bewertet, wobei der verarbeitete Potentialwert durch das Potentiometer mittels ADC gelesen wird.

13. Intelligentes Ventil nach einem der Ansprüche 10 bis 12,
**dadurch gekennzeichnet, dass**
die Infrarotkommunikationseinheit (27), die dazu verwendet wird, eine Infrarotkommunikation mit externen Vorrichtungen zu schaffen, aus einem Sender und einem Empfänger besteht.

14. Intelligentes Ventil nach einem der Ansprüche 8 bis 13,
**dadurch gekennzeichnet, dass**
die interne Batterie (20) Leistung bereitstellt, die von einer Datenverarbeitungs- und Kreditierungskanal-Schnittstelle (40), der Funkkommunikationsschnittstelle (39), einer Ventilsteuerungs- und Messeinheit-Schnittstelle und einer lokalen Bemessungs- und Steuereinheit-Schnittstelle genutzt wird.

15. Intelligentes Ventil nach Anspruch 14,
**gekennzeichnet durch**
eine Leistungseinheit (19), die aus einer Gleichspannungsquelle mit niedrigem Pegel besteht, die an die Eingangsenden einer externen Gleichspannungsquelle mit niedrigem Pegel anschließbar ist und die Leistung bereitstellt, die von der Datenverarbeitungs- und Kreditierungskanal-Schnittstelle (40), der Funkkommunikationsschnittstelle (39), der Ventilsteuerungs- und Messeinheit-Schnittstelle und der lokalen Bemessungs- und Steuereinheit-Schnittstelle genutzt wird.

## Revendications

1. Une vanne intelligente comprenant un corps de vanne (1) et des brides (9), avec des têtes amovibles pouvant tourner autour d'un axe du corps de vanne (1), et comportant un certain nombre de perforations destinées au montage de tubes comprenant des brides fixes présentant des trous pour vis qui sont placés aux deux extrémités du corps de vanne (1), vanne dans laquelle, au cours de l'installation de la vanne, les brides (9) sont adaptées, par rotation, dans les brides fixes des tubes installés à l'avance, de telle sorte que les trous pour vis correspondent aux perforations des brides (9), et puissent être immobilisés en utilisant des boulons et des écrous, et que la position de la vanne soit réglable en fonction de son environnement sans qu'il soit nécessaire de procéder à un sectionnement et à une re-soudure des brides fixes des tubes, vanne dans laquelle un volet de vanne (2) est placé à l'intérieur du corps de vanne (1), verticalement par rapport à son axe, entre l'orifice d'admission de gaz (10) et l'orifice de sortie de gaz (11) de la vanne, le volet de vanne (2) ayant la forme d'un dôme présentant une cavité centrale suffisamment large pour recevoir une portion terminale d'un axe (8), vanne dans laquelle le volet de vanne (2) est fixé sur l'axe (8) par montage d'une portion terminale de l'axe (8) qui est placée parallèlement à l'axe du corps de vanne (1) et qui se déplace sur cet axe du corps de vanne (1), vanne dans laquelle un ressort de volet (3) est placé sur une surface inférieure du volet de vanne (2), en vue de maintenir le volet de vanne (2) en équilibre en position fermée, le basculement du volet de vanne (2) étant empêché en plaçant un ressort de stabilisation de volet (4) sur une surface supérieure du volet de vanne (2), vanne dans laquelle une came (5) est placée sur l'axe (8), et est entraînée en rotation par un arbre à came (6), la came (5) ayant une structure en forme de L, comprenant un bras long et un bras court perpendiculaire qui coupe le bras long dans la direction d'un axe de rotation de l'arbre à came (6), vanne dans laquelle les surfaces formant un coin vues depuis l'extérieur (5a) de la structure en forme de L sont inclinées vers l'extérieur, tandis que les surfaces en forme de coin intérieur (5b) de la structure en forme de L sont rectilignes et l'axe de rotation de l'arbre à came (6) coupe perpendiculairement un axe de rotation de l'axe (8), vanne dans laquelle la came (5), à laquelle le mouvement de rotation obtenu par un moteur électrique (13) est transmis au moyen de l'arbre à came (6), lequel est entraîné en rotation par un engrenage (14), entraîne l'axe (8) parallèlement à l'axe du corps de vanne (1) et détermine ainsi l'ouverture/la fermeture du volet de vanne (2) auquel l'axe (8) est relié.

2. Une vanne intelligente selon la revendication 1, **caractérisée en ce que** le ressort de volet (3), qui maintient le volet de vanne (2) en équilibre en position fermée, est placé entre un tamis filtrant (7), disposé à l'emplacement de l'orifice d'admission de gaz (10) et la surface inférieure du volet de vanne (2).

3. Une vanne intelligente selon l'une ou l'autre des revendications 1 ou 2, **caractérisée en ce que** le ressort de stabilisation de volet (4) est placé, concentriquement à l'axe (8), entre la surface supérieure du volet de vanne (2) et une feuillure formée à l'autre extrémité de l'axe (8) en vue d'empêcher le basculement du volet de vanne (2).

4. Une vanne intelligente selon l'une quelconque des revendications 1 à 3, **caractérisée par** une unité d'entraînement (12), constituée par le moteur électrique (13), fonctionnant sous basse tension et basse intensité ; l'engrenage (14) ; une vis sans fin (15) ; un pignon qui lui est associé (16) ; une came de micro-interrupteur (17) et un micro-interrupteur (18) qui sont montés sur ledit pignon associé (16) et presque en contact l'un avec l'autre ; la came de micro-interrupteur (17) transférant les données relatives à la position de la came (5) utilisées pour l'ouverture/la fermeture du volet de vanne (2) à une unité de contrôle du moteur (47), et pouvant également ouvrir et fermer le micro-interrupteur (18) ; ladite unité d'entraînement (12) étant également celle qui détermine une rotation dans un sens et dans l'autre du moteur électrique (13), au moyen d'un microprocesseur de contrôle de vanne et de mesure (31), et qui freine le moteur électrique (13) en vue d'immobiliser la came (5) exactement dans une position désirée à l'issue d'une opération d'entraînement par le moteur.

5. Une vanne intelligente selon l'une quelconque des revendications 1 à 4, **caractérisée par** un détecteur de pression (35) mesurant la pression du gaz pénétrant dans la vanne, et un détecteur de température (34) mesurant sa température, placés dans une portion du corps de vanne (1), entre le tamis filtrant (7) installé à l'emplacement de l'orifice d'admission de gaz (10) et le volet de vanne (2), de sorte que la vanne soit utilisable comme correcteur de volume de gaz.

6. Une vanne intelligente selon l'une quelconque des revendications 1 à 5, **caractérisée par** une interface de communication par câble, créée par un USART, qui assure une connexion avec des stations PCs normales ou des stations POS sous des standards RS 232 ou RS 485.

7. Une vanne intelligente selon l'une quelconque des revendications 1 à 6, **caractérisée par** une interface de communication radio (sans fil) (39), qui constitue une interface qui fournit des lectures métriques sous forme d'AMR (Lecture Métrique Automatique) et le contrôle bidirectionnel à distance de la vanne.

8. Une vanne intelligente selon l'une quelconque des revendications 4 à 7, **caractérisée par** le microprocesseur de contrôle de vanne et de mesure (31), qui envoie les commandes des opérations d'ouverture/fermeture de la vanne, qui procède aux calculs utilisant les données mesurées sous forme de valeurs d'impulsions de gaz obtenues par un détecteur d'impulsions de gaz; les valeurs de température obtenues par le détecteur de température (34), les valeurs de pressions obtenues par le détecteur de pression (35) et les valeurs d'accélération obtenues par un détecteur d'accélération (36), les données de niveau d'énergie d'une batterie interne (20), et qui transmet les données précitées à un microprocesseur d'évaluation et de contrôle (25) au moyen d'un bus de contrôle de canaux en série (23).

9. Une vanne intelligente selon l'une quelconque des revendications 1 à 7, **caractérisée par** une unité EEprom de contrôle de vanne et de mesure (32) qui est utilisée pour conserver des données telles que les valeurs de position, de température, de pression et d'accélération de la vanne dans une mémoire, pour le cas où se produirait une interruption d'énergie pour une raison quelconque.

10. Une vanne intelligente selon l'une ou l'autre des revendications 8 ou 9, **caractérisée par** le microprocesseur local d'évaluation et de contrôle (25) contenu dans une unité locale d'évaluation et de contrôle (24), en même temps qu'une unité locale EEprom d'évaluation et de contrôle (26), une unité indicatrice (29), une unité d'avertissement sonore (28) et une unité de communication par infra-rouges (27) qui reçoit les informations calculées et évaluées par le microprocesseur de contrôle de vanne et de mesure (31) au moyen du bus de contrôle de canaux en série (23) et qui détermine les opérations requises en ligne avec les données reçues et affiche lesdites données sur un écran d'affichage LCD de l'unité indicatrice (29).

11. Une vanne intelligente selon la revendication 10, **caractérisée par** l'unité locale EEprom d'évaluation et de contrôle (26), qui conserve toutes les informations dans sa mémoire quand l'énergie est interrompue pour une raison quelconque.

12. Une vanne intelligente selon l'une quelconque des revendications 4 à 11, **caractérisée par** le microprocesseur de contrôle de vanne et de mesure (31), qui traite et qui évalue les informations sur la position de la came (5) obtenues par la rotation d'un potentiomètre de feed-back par l'engrenage (14), la valeur potentielle traitée étant lue par le potentiomètre par ADC.

13. Une vanne intelligente selon l'une quelconque des revendications 10 à 12, **caractérisée par** l'unité de communication par infra-rouges (27) qui est utilisée pour assurer une communication par infra-rouges avec des dispositifs externes consistant en un transmetteur et un récepteur.

14. Une vanne intelligente selon l'une quelconque des revendications 8 à 13, **caractérisée en ce que** la batterie interne (20) fournit l'énergie utilisée par une interface de traitement de données et d'alimentation de canaux (40), l'interface de communication radio (39), une interface de contrôle de vanne et de mesure et une interface locale d'évaluation et de contrôle.

15. Une vanne intelligente selon la revendication 14, **caractérisée par** une unité de fourniture d'énergie (19), constituée par une source de courant continu à basse puissance DC qui peut être connectée aux bornes d'entrée d'une source extérieure de courant continu à basse énergie DC, et qui fournit l'énergie utilisée par l'interface de traitement de données et d'alimentation de canaux (40), l'interface de communication radio (39), l'interface de contrôle de vanne et de mesure et l'interface locale d'évaluation et de contrôle.
